# EUROPÄISCHE PATENTSCHRIFT

(11) **EP 2 782 719 B1**
(45) Veröffentlichungstag und Bekanntmachung des Hinweises auf die Patenterteilung: **21.08.2019**
(21) Anmeldenummer: 12790486.0
(22) Anmeldetag: 09.11.2012
(51) Int. Cl.: H02J 50/10, B25H 3/02

(54) **HANDWERKZEUGKOFFER**
CASING FOR A HAND-HELD TOOL
MALLETTE D'OUTIL À MAIN

(30) Priorität: 22.11.2011 DE 102011086884
(43) Veröffentlichungstag der Anmeldung: 01.10.2014
(73) Patentinhaber: Robert Bosch GmbH, 70442 Stuttgart (DE)
(72) Erfinder: REJMAN, Marcin, 71332 Waiblingen (DE); AMANN, Volker, 86153 Augsburg (DE); LOHR, Guenter, 70771 Leinfelden-Echterdingen (DE); MACK, Juergen, 73035 Goeppingen (DE); HUBER, Brett, Arlington Heights 6004 (US); DIETZEL, Friederike, 70469 Stuttgart (DE)
(86) Internationale Anmeldenummer: PCT/EP2012/072289
(87) Internationale Veröffentlichungsnummer: WO 2013/075955

(56) Entgegenhaltungen:
- DE-A1-102005 062 997
- KR-A- 20110 107 728
- US-A1- 2005 098 403
- US-A1- 2006 027 557
- US-A1- 2008 035 507
- US-A1- 2009 065 515
- US-A1- 2010 231 161
- US-A1- 2011 241 608

## Beschreibung

### Stand der Technik

Es ist bereits ein Handwerkzeugkoffer mit zumindest einer Innenraumstrukturierungseinheit mit zumindest einem Innenraumstrukturierungselement, das dazu vorgesehen ist, zumindest einen Induktivladeaufnahmebereich für zumindest einen Handwerkzeugakku zu begrenzen, vorgeschlagen worden. Beispiele sind aus der DE102005062997A1, US2010231161A1, US2011241608A1, KR10-2011-0107728A und US2006027557A1 bekannt.

### Offenbarung der Erfindung

Die Erfindung geht aus von einem Handwerkzeugkoffer mit zumindest einer Innenraumstrukturierungseinheit mit zumindest einem Innenraumstrukturierungselement, das dazu vorgesehen ist, zumindest einen Induktivladeaufnahmebereich für zumindest einen Handwerkzeugakku zu begrenzen.

Es wird vorgeschlagen, dass die Innenraumstrukturierungseinheit modular kombinierbar ausgebildet ist. Unter einer "Innenraumstrukturierungseinheit" soll insbesondere eine Einheit verstanden werden, die dazu vorgesehen ist, einen Innenraum eines Handwerkzeugkoffers in Teilbereiche zu unterteilen. Insbesondere sind die Teilbereiche dazu vorgesehen, zumindest einen Handwerkzeugakku und/oder ein Handwerkzeug aufzunehmen. Vorzugsweise weist die Innenraumstrukturierungseinheit zumindest zwei Innenraumstrukturierungselemente auf. Unter einem "Innenraumstrukturierungselement" soll insbesondere ein Element verstanden werden, das maximal 95 %, insbesondere maximal 80 %, vorteilhaft maximal 60 %, besonders vorteilhaft maximal 40 %, einer Grundfläche eines Innenraums des Handwerkzeugkoffers verdeckt. Insbesondere ist das Innentraumstrukturierungselement gitter- und/oder rasterartig und/oder zumindest teilweise transparent ausgebildet. Insbesondere unterscheidet sich ein Innenraumstrukturierungselement von einem Bauteil, das dazu vorgesehen ist, sowohl einen Induktivladeaufnahmebereich eines, insbesondere mit einem Handwerkzeug gekoppelten und/oder in ein Handwerkzeug integrierten, Handwerkzeugakkus und einen Induktivladeaufnahmebereich eines Handwerkzeugakkus, der insbesondere als Ersatzakku vorgesehen ist, zu begrenzen. Alternativ sind Ausgestaltungen mit zumindest zwei Innenraumstrukturierungselementen für separate Handwerkzeugakkus und zumindest einem Innenraumstrukturierungselement für zumindest ein Handwerkzeug denkbar. Unter einem "Induktivladeaufnahmebereich" soll insbesondere ein Aufnahmebereich des Handwerkzeugkoffers verstanden werden, der dazu vorgesehen ist, zumindest einen Handwerkzeugakku aufzunehmen und ein induktives Laden eines in den Induktivladeaufnahmebereich eingelegten Handwerkzeugakkus zu unterstützen. Insbesondere ist der Induktivladeaufnahmebereich dazu vorgesehen, ein Laden des Handwerkzeugakkus mit einer Effizienz von zumindest 70 %, insbesondere zumindest 80 %, vorteilhaft zumindest 90 %, vorzugsweise zumindest 95 %, zu erlauben. Insbesondere erlaubt der Induktivladeaufnahmebereich eine induktive Aufladung des Handwerkzeugakkus durch die Wandung des Handwerkzeugkoffers hindurch. Insbesondere ist der Induktivladeaufnahmebereich dazu vorgesehen, einen Handwerkzeugakku aufzunehmen, der mit einem Handwerkzeug mechanisch verbunden und/oder in ein Handwerkzeug integriert ist. Vorzugsweise sind Gehäuseteile des Handwerkzeugkoffers zumindest in einem Nahbereich des Induktivladeaufnahmebereichs aus einem isolierenden Material gefertigt, um geringe Verluste bei einer Energieübertragung durch Induktion zu gering zu halten. Unter "vorgesehen" soll insbesondere speziell ausgelegt und/oder ausgestattet verstanden werden. Darunter, dass ein Handwerkzeugakku dazu vorgesehen ist, "induktiv" geladen zu werden, soll insbesondere verstanden werden, dass der Handwerkzeugakku zumindest eine Ladespule aufweist. Vorteilhaft weist der Handwerkzeugakku zumindest eine Koppelstelle auf, die dazu vorgesehen ist, den Handwerkzeugakku mechanisch und/oder elektrisch mit einem Handwerkzeug zu verbinden. Alternativ ist es denkbar, dass der Handwerkzeugakku in ein Handwerkzeug integriert ist. Insbesondere ist die Koppelstelle Teil eines Rast- und/oder Drehmechanismus. Unter einer "Ladespule" soll insbesondere eine Spule mit zumindest einem gewundenen, insbesondere gewickelten, und/oder auf einer Leiterplatte gebildeten, elektrischen Leiter verstanden werden, die dazu vorgesehen ist, in zumindest einem Betriebszustand eine Energie zum Laden und/oder Entladen, insbesondere zumindest einer, vorzugsweise elektrochemischen, Energiespeichereinheit des Handwerkzeugackus zu senden und/oder vorzugsweise zu empfangen. Vorzugsweise ist die Ladespule dazu vorgesehen, einen elektrischen Wechselstrom in ein magnetisches Wechselfeld umzuwandeln und/oder umgekehrt. Insbesondere ist die Ladespule dazu vorgesehen, empfangene Energie direkt, insbesondere über einen Spannungswandler, einem Verbraucher zuzuführen. Vorzugsweise weist ein System mit einem Handwerkzeugakku und mit einem Ladegerät und/oder einem Handwerkzeug zumindest zwei aufeinander abgestimmte, von einem Bediener räumlich trennbare Ladespulen auf, wovon in zumindest einem Betriebszustand zumindest eine Ladespule dazu vorgesehen ist, ein magnetisches Wechselfeld zu erzeugen, das in zumindest einer weiteren Ladespule einen elektrischen Wechselstrom induziert. Insbesondere weist der Handwerkzeugakku Elektronik auf, die dazu vorgesehen ist, einen in der Ladespule induzierten Wechselstrom in einen in der Energiespeichereinheit speicherbaren Gleichstrom zu wandeln und/oder einen aus der Energiespeichereinheit bezogenen Gleichstrom in einen Wechselstrom zu wandeln, um die Ladespule damit zu speisen und Energie an eine korrespondierende Ladespule zu übertragen. Insbesondere sind Ausgestaltungen denkbar, in denen der Handwerkzeugkoffer eine Induktionskopplungseinheit aufweist, die von zumindest zwei miteinander elektrisch verbundenen Ladespulen gebildet ist und dazu vorgesehen ist, mit einer der Ladespulen Energie von einer korrespondierenden Ladestation zu empfangen und mit der anderen Ladespule Energie an einen in den Induktivladeaufnahmebereich eingelegten Handwerkzeugakku zu senden. Vorzugsweise ist der Induktivladeaufnahmebereich in einem Nahbereich einer Wandung des Handwerkzeugkoffers angeordnet, um ein direktes Laden des Handwerkzeugakkus durch die Wandung hindurch zu ermöglichen. Unter "modular kombinierbar" soll insbesondere verstanden werden, dass zumindest ein Bestandteil der Innenraumstrukturierungseinheit, insbesondere ein Grundkörper, dazu vorgesehen ist, mit unterschiedlichen Varianten von Bestandteilen zumindest eines anderen Bestandteils der Innenraumstrukturierungseinheit, insbesondere eines Innenraumstrukturierungselements, kombiniert zu werden. Insbesondere weisen die Bestandteile Positionierungshilfsmittel auf, die dazu vorgesehen sind, ein Verrutschen der Bestandteile, insbesondere nach einem Einlegen des Innenraumstrukturierungselements in den Handwerkzeugkoffer, bzw. nach einer Kombinierung des Innenraumstrukturierungselements mit der Innenraumstrukturierungseinheit, gegeneinander zu vermeiden. Insbesondere ist es denkbar, dass sich mehrere Innenraumstrukturierungselemente gegenseitig in ihren Positionen fixieren. Es kann insbesondere eine erhöhte Flexibilität, insbesondere hinsichtlich einer Größe des Handwerkzeugakkus, erreicht werden, wodurch insbesondere eine erhöhte Effizienz bei einem induktiven Laden des Handwerkzeugakkus, insbesondere durch einen niedrigen Abstand zwischen korrespondierenden Ladespulen, erreicht werden kann. Weiterhin kann eine erhöhte Flexibilität bei einer Fertigung des Handwerkzeugkoffers erreicht werden, wobei insbesondere Grundbestandteile, insbesondere Gehäuseteile, des Handwerkzeugkoffers, unabhängig von Ausgestaltungen eines später darin zu lagernden Handwerkzeugakkus und/oder Handwerkzeugs, produziert werden können. Insbesondere können Kosten reduziert werden.

In einer vorteilhaften Ausgestaltung wird vorgeschlagen, dass das Innenraumstrukturierungselement zumindest werkzeuglos montierbar bezüglich der Innenraumstrukturierungseinheit ausgebildet ist. Unter einem "werkzeuglos montierbaren" Objekt soll insbesondere ein Objekt verstanden werden, das durch einen Bediener ohne Einsatz von nicht mit dem Handwerkzeugkoffer gekoppelten Objekten, insbesondere Werkzeugen, mit zumindest einem Teil des Handwerkzeugkoffers, insbesondere einem Grundkörper der Innenraumstrukturierungseinheit, verbindbar ist. Vorteilhaft ist das Innenraumstrukturierungselement zu einer Klemm- und/oder Rastverbindung vorgesehen. Unter einer "Klemmverbindung" soll insbesondere eine Verbindung verstanden werden, bei der durch eine Verbindungsbewegung eines zu verbindenden Körpers relativ zu einem Grundkörper Kräfte erzeugt werden, die zumindest im Wesentlichen senkrecht zu einer Richtung der Verbindungsbewegung orientiert sind, und zu einem Kraftschluss führen. Unter einer "Rastverbindung" soll insbesondere eine Verbindung verstanden werden, bei der durch eine Verbindungsbewegung eine Auslenkung und/oder ein Zurückschnappen eines Federelements verursacht und ein Formschluss in Verbindungsrichtung hergestellt wird. Insbesondere ist das Innenraumstrukturierungselement dazu vorgesehen, dauerhaft mit dem Grundkörper verbunden zu werden, wodurch insbesondere eine erhöhte Präzision einer Positionierung eines Handwerkzeugakkus erreicht werden kann, was insbesondere bei einem induktiven Ladevorgang durch eine Unterseite des Handwerkzeugkoffers vorteilhaft ist. Alternativ ist es denkbar, dass das Innenraumstrukturierungselement dazu vorgesehen ist, in einem Schweißprozess mit der Innenraumstrukturierungseinheit verbunden zu werden und/oder dass das Innenraumstrukturierungselement durch einen Schweißprozess mit der Innenraumstrukturierungseinheit verbunden ist.

Vorteilhaft wird vorgeschlagen, dass das Innenraumstrukturierungselement werkzeuglos lösbar von der Innenraumstrukturierungseinheit ausgebildet ist. Unter einem "werkzeuglos lösbaren" Objekt soll insbesondere verstanden werden, dass das Objekt durch einen Bediener ohne Einsatz von nicht mit dem Handwerkzeugkoffer gekoppelten Objekten, insbesondere Werkzeugen, aus dem Handwerkzeugkoffer entnehmbar ist. Insbesondere ist das Innenraumstrukturierungselement zu einer werkzeuglos lösbaren Verbindung mit zumindest einem Teil des Handwerkzeugkoffers vorgesehen. Insbesondere ist eine werkzeuglos lösbare Verbindung wiederholbar herstell- und lösbar, insbesondere ohne dass bei einer Herstellung der Verbindung Material zugegeben wird und/oder während eines Lösens wesentliche Mengen, insbesondere mehr als 1 %, Material abgetragen wird. Insbesondere ist das Innenraumstrukturierungselement dazu vorgesehen, gemeinsam mit einem Grundkörper der Innenraumstrukturierungseinheit entnommen zu werden. Es kann insbesondere eine hohe Flexibilität erreicht werden.

Weiterhin wird vorgeschlagen, dass die Innenraumstrukturierungseinheit zumindest einen Grundkörper zur Positionierung des Innenraumstrukturierungselements aufweist. Insbesondere ist der Grundkörper als Gitterstruktur und/oder als Rost, vorteilhaft plattenartig, ausgebildet. Insbesondere ist der Grundkörper dazu vorgesehen, aus dem Handwerkzeugkoffer werkzeuglos gelöst zu werden. Insbesondere ist das Innenraumstrukturierungselement dazu vorgesehen, zwischen Streben des Grundkörpers und/oder in Rastmulden des Grundkörpers eingeklickt zu werden. Alternativ weist der Handwerkzeugkoffer zumindest ein Gehäuseteil auf, das einstückig mit dem Grundkörper ausgebildet ist. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Insbesondere weist der Grundkörper zumindest zwei Fixierpositionen zu einer Fixierung des zumindest einen Innenraumstrukturierungselements auf. Insbesondere weist die Fixierposition zumindest ein Form und/oder Kraftschlussmittel auf, das dazu vorgesehen ist, mit zumindest einem Kraft- und/oder Formschlussmittel des Innenraumstrukturierungselements zu korrespondieren. Es kann insbesondere eine erhöhte Flexibilität erreicht werden.

Ferner wird vorgeschlagen, dass der Grundkörper von zumindest einem Raumteilerelement gebildet ist. Unter einem "Raumteilerelement" soll insbesondere ein Objekt, insbesondere eine Wand, ein Gitter und/oder eine Stange verstanden werden, das dazu vorgesehen ist, zumindest einen Teil eines Raums in zwei Teile aufzuteilen. Vorzugsweise ist das Raumteilerelement zumindest im Wesentlichen senkrecht zu einer Unterseite des Handwerkzeugkoffers angeordnet. Unter einer "Unterseite" des Handwerkzeugkoffers soll insbesondere eine Seite verstanden werden, die einem als Deckel ausgebildeten Gehäuseteil gegenüberliegt. Insbesondere ist die Unterseite zumindest im Wesentlichen senkrecht zu einer Höhe des Handwerkzeugkoffers orientiert. Unter einer "Höhe" soll insbesondere eine Richtung verstanden werden, in der eine Ausdehnung des Handwerkzeugkoffers minimal ist. Unter "im Wesentlichen senkrecht" soll insbesondere ein Winkel verstanden werden, der weniger als 30°, insbesondere weniger als 15°, vorteilhaft weniger als 5°, vorzugsweise weniger als 1° von 90° abweicht. Insbesondere ist das Raumteilerelement zumindest im Wesentlichen parallel zu einer Ebene angeordnet. Darunter, dass ein Objekt "im Wesentlichen parallel zu einer Ebene" angeordnet ist, soll insbesondere verstanden werden, dass zumindest 50 %, insbesondere zumindest 70 %, vorteilhaft zumindest 90 %, vorzugsweise zumindest 95 % des Objekts einen Abstand zu der Ebene aufweisen, der kleiner ist als 3 cm, insbesondere kleiner ist als 2 cm, vorteilhaft kleiner ist als 1 cm, vorzugsweise kleiner ist als 0,5 cm. Alternativ ist auch ein geschwungenes und/oder gebogenes Raumteilerelement denkbar. Insbesondere ist der Grundkörper von mehreren Raumteilerelementen gebildet, die vorzugsweise einstückig ausgebildet sind. Vorzugsweise bildet der Grundkörper ein Gerüst. Insbesondere ist das Innenraumstrukturierungselement dazu vorgesehen, stufenlos an einem als Gerüst ausgebildeten Grundkörper in seiner Position verstellt zu werden. Es kann insbesondere eine einfache Konstruktion und/oder Bedienung erreicht werden.

Weiterhin wird vorgeschlagen, dass das Innenraumstrukturierungselement zu einer Steckverbindung vorgesehen ist. Unter einer Steckverbindung soll insbesondere eine Klemm- und/oder Rastverbindung verstanden werden, wobei zu einer Herstellung und/oder Trennung der Verbindung eine lineare Verbindungsbewegung genügt. Alternativ sind auch Ausgestaltungen denkbar, in denen die Klemm- und/oder Rastverbindung dazu vorgesehen ist, durch eine Dreh- und/oder Kippbewegung hergestellt und/oder gelöst zu werden. Es kann insbesondere eine einfache Handhabung erreicht werden.

Ferner wird vorgeschlagen, dass das Innenraumstrukturierungselement als Raumteilerelement ausgebildet ist. Insbesondere ist das als Raumteilerelement ausgebildete Innenraumstrukturierungselement dazu vorgesehen, orthogonal zu mindestens einem Raumteilerelement des Grundkörpers angeordnet zu werden. Es kann insbesondere eine einfache Handhabung erreicht werden.

Vorteilhaft ist das zumindest eine Innenraumstrukturierungselement als Schale ausgebildet. Darunter, dass das Innenraumstrukturierungselement als "Schale" ausgebildet ist, soll insbesondere verstanden werden, dass das Innenraumstrukturierungselement als Grundkörper ausgebildet ist, der eine Ausformung aufweist, die dazu vorgesehen ist, ein bestimmtes Objekt, vorzugsweise zumindest einen Handwerkzeugakku, zu lagern. Es kann insbesondere eine sichere Lagerung erreicht werden.

Weiterhin wird vorgeschlagen, dass das Innenraumstrukturierungselement dazu vorgesehen ist, von einem Bediener bearbeitet zu werden, um es an ein einzulegendes Objekt anzupassen. Insbesondere ist das Innenraumstrukturierungselement zumindest im Wesentlichen als Quader ausgebildet. Insbesondere weist das Innenraumstrukturierungselement vorgefertigte Sollbruchstellen auf, die eine Entfernung von Teilen des Innenraumstrukturierungselements erlauben. Insbesondere ist das Innenraumstrukturierungselement aus einem schneidbaren Material, insbesondere einen Schaumstoff gebildet, und ist dazu vorgesehen, durch einen Bediener auf eine für ein einzulegendes Objekt geeignete Form zugeschnitten zu werden. Es kann insbesondere eine hohe Flexibilität, insbesondere hinsichtlich einzulegender Handwerkzeuge und/oder Handwerkzeugakkus, erreicht werden.

Ferner wird ein System mit zumindest einem Handwerkzeugkoffer und zumindest zwei unterschiedlichen Innenraumstrukturierungselementen, die insbesondere zur Lagerung unterschiedlich ausgebildeter, insbesondere unterschiedlich großer Handwerkzeuge und/oder Handwerkzeugakkus vorgesehen sind, vorgeschlagen, wobei in Abhängigkeit von einem einzulegenden Handwerkzeug und/oder Handwerkzeugakku eines der zwei Innenraumstrukturierungselemente dazu vorgesehen ist, insbesondere dauerhaft, insbesondere während einer Produktion des Handwerkzeugkoffers, in den Handwerkzeugkoffer eingelegt zu werden, insbesondere mit diesem, vorzugsweise werkzeuglos, verbunden zu werden. Vorzugsweise weist das System eine Vielzahl von Innenraumstrukturierungselementen zur Aufnahme von Handwerkzeugen und eine Vielzahl von Innenraumstrukturierungselementen zur Aufnahme von Handwerkzeugakkus auf, wobei bei einer Konfiguration eines Handwerkzeugkoffers jeweils zumindest ein Innenraumstrukturierungselement für einen Handwerkzeugakku und/oder zumindest ein Innenraumstrukturierungselement für ein Handwerkzeug ausgewählt wird und die Innenraumstrukturierungselemente dauerhaft und/oder lösbar mit dem Handwerkzeugkoffer, insbesondere in geeigneter Position, um ein induktives Laden zu begünstigen, verbunden werden. Unter einer "dauerhaften" Verbindung soll insbesondere eine Verbindung verstanden werden, die dazu vorgesehen ist, lediglich unter Einsatz von Werkzeugen, die nicht mit dem Handwerkzeugkoffer gekoppelt sind, getrennt zu werden. Insbesondere ist eine dauerhafte Verbindung durch einen Stoffschluss, insbesondere einen Schweißprozess, gebildet.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Handwerkzeugkoffer in einer schematischen Darstellung in geöffnetem Zustand von oben,
- Fig. 2: einen alternativen erfindungsgemäßen Handwerkzeugkoffer,
- Fig. 3: einen dritten erfindungsgemäßen Handwerkzeugkoffer und
- Fig. 4: einen vierten erfindungsgemäßen Handwerkzeugkoffer.

### Beschreibung der Ausführungsbeispiele

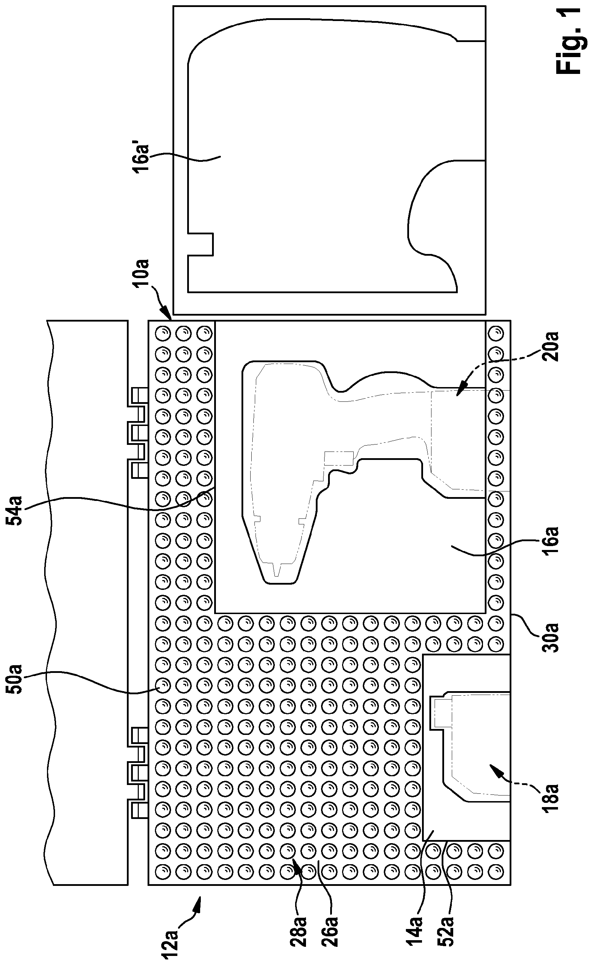

Figur 1 zeigt einen Handwerkzeugkoffer 10a mit einer Innenraumstrukturierungseinheit 12a mit zwei Innenraumstrukturierungselementen 14a, 16a. Die Innenraumstrukturierungseinheit 12a ist modular kombinierbar ausgebildet. Die Innenraumstrukturierungselemente 14a, 16a sind dazu vorgesehen, jeweils einen Induktivladeaufnahmebereich 18a, 20a für jeweils einen Handwerkzeugakku (nur angedeutet) zu begrenzen. Die Innenraumstrukturierungselemente 14a, 16a sind werkzeuglos montierbar und lösbar von der Innenraumstrukturierungseinheit 12a ausgebildet. Weiterhin weist die Innenraumstrukturierungseinheit 12a einen Grundkörper 26a zur Positionierung der Innenraumstrukturierungselemente 14a, 16a auf. Der Grundkörper 26a weist Noppen 50a auf, die Fixierpositionen zu einer seitlichen Fixierung der Innenraumstrukturierungselemente 14a, 16a bereitstellen. Die Noppen 50a sind in einem regelmäßigen rechtwinkligen Raster angeordnet. Mittelpunkte zweier benachbarter Noppen 50a weisen jeweils einen Abstand von 10 mm auf. Die Noppen 50a weisen eine Höhe von 2 mm auf. Der Handwerkzeugkoffer 10a weist einen Gehäuseteil 28a auf, das eine Unterseite des Handwerkzeugkoffers 10a bildet. Das Gehäuseteil 28a ist einstückig mit dem Grundkörper 26a ausgebildet. Die Innenraumstrukturierungselemente 14a, 16a sind als Schalen ausgebebildet. Das Innenraumstrukturierungselement 14a ist zu einer Lagerung eines Handwerkzeugakkus vorgesehen, der dazu vorgesehen ist, induktiv geladen zu werden. Das Innenraumstrukturierungselement 16a ist dazu vorgesehen, ein Handwerkzeug zu lagern, an das ein Handwerkzeugakku angekoppelt ist, der dazu vorgesehen ist, induktiv geladen zu werden. Eine Seite der als Schale ausgebildeten Innenraumstrukturierungselemente 14a, 16a ist dabei offen ausgebildet, so dass ein eingelegter Handwerkzeugakku direkt an einer Wandung 30a des Handwerkzeugkoffers 10a anliegen kann. Das Innenraumstrukturierungselement 14 a ist hier unmittelbar an der Wandung 30a positioniert und für einen kleinen Handwerkzeugakku vorgesehen. Das Innenraumstrukturierungselement 16a ist von der Wandung 30a entfernt positioniert, um ein Handwerkzeug mit einem großen angekoppelten Handwerkzeugakku aufzunehmen. Die Innenraumstrukturierungselemente 14a, 16a können zur Anpassung an unterschiedlich große Handwerkzeugakkus werkzeuglos entnommen und an anderer Position, vorgegeben durch die Noppen 50a, wieder eingesetzt werden. Die Innenraumstrukturierungselemente 14a, 16a weisen dazu Kanten 52a, 54a auf, die dazu vorgesehen sind, zwischen den Noppen 50a positioniert zu werden und durch diese gegen ein seitliches Rutschen fixiert zu werden. Große Handwerkzeugakkus ragen über das Innenraumstrukturierungselement 14a, 16a hinaus.

Alternativ oder zusätzlich zu den Kanten 52a, 54a kann zumindest eine, vorzugsweise können zumindest zwei Mulden an den Innenraumstrukturierungselementen 14a, 16a vorgesehen sein, die dazu vorgesehen sind, die Noppen 50a aufzunehmen und/oder sich mit diesen zu verrasten und/oder zu verklemmen.

Alternativ können die Abstände zwischen Mittelpunkten der Noppen 50a auch andere Werte, insbesondere zwischen 5 mm und 20 mm, annehmen. Auch sind andere Höhen der Noppen 50a, insbesondere zwischen 1 mm und 5 mm, denkbar.

Weiterhin zeigt Figur 1 ein System mit dem Handwerkzeugkoffer 10a und zwei unterschiedlichen Innenraumstrukturierungselementen 16 a, 16a', wobei in Abhängigkeit von einem einzulegenden Handwerkzeug eines der zwei Innenraumstrukturierungselemente 16a, 16a' dazu vorgesehen ist, in den Handwerkzeugkoffer 10a eingelegt zu werden. Die Innenraumstrukturierungselemente 16a, 16a' sind als Schalen ausgebildet. So kann ein Bediener ein geeignetes Innenraumstrukturierungselement 16a, 16a' für ein zu transportierendes Handwerkzeug auswählen.

Weiterhin kann das Innenraumstrukturierungselement 16a' Teil eines Systems mit einem Handwerkzeug sein und insbesondere dazu vorgesehen sein, gemeinsam mit diesem ausgeliefert zu werden.

Weiterhin kann es vorgesehen sein, dass ein Handwerkzeug und/oder ein Handwerkzeugakku mit einem passend ausgeformten, als Schale ausgebildeten Innenraumstrukturierungselement, das dazu vorgesehen ist, mit dem Handwerkzeugkoffer 10a zu korrespondieren, in einem System angeboten wird, um einen optimalen Sitz des Handwerkzeugs und/oder des Handwerkzeugakkus zu erreichen. Weiterhin kann erreicht werden, dass ein gleicher Handwerkzeugkoffer durch Einsatz unterschiedlicher Innenraumstrukturierungselemente für unterschiedliche Handwerkzeuge und/oder Handwerkzeugakkus geeignet ist.

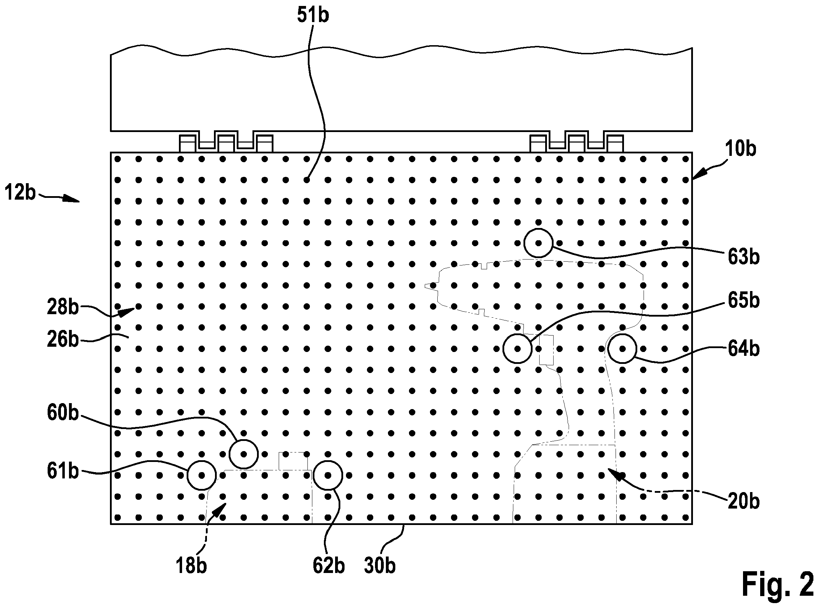

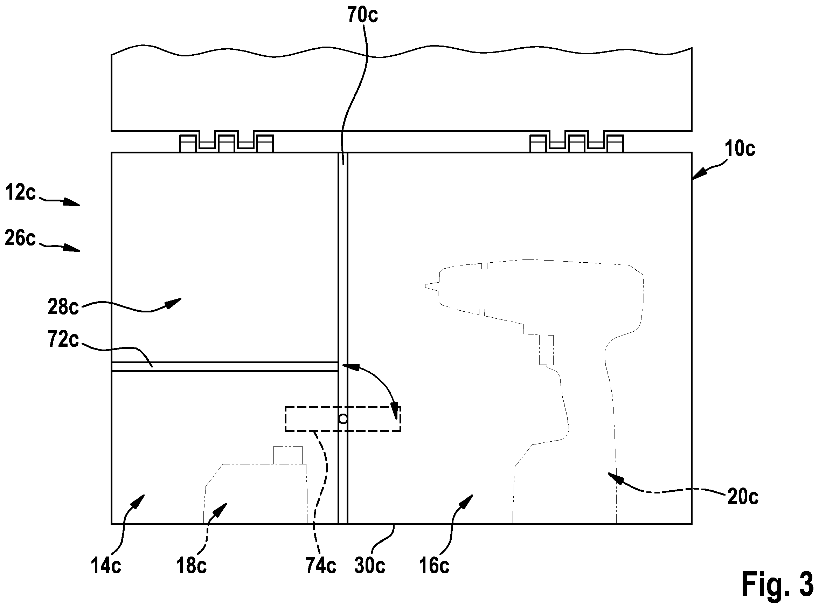

In den Figuren 2 und 3 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figur 1, verwiesen werden kann. Zur Unterscheidung der Ausführungsbeispiele ist der Buchstabe a den Bezugszeichen des Ausführungsbeispiels in der Figur 1 nachgestellt. In den Ausführungsbeispielen der Figuren 2 bis 3 ist der Buchstabe a durch die Buchstaben b bzw. c ersetzt.

Figur 2 zeigt einen weiteren Handwerkzeugkoffer 10b mit einer Innenraumstrukturierungseinheit 12b mit sechs Innenraumstrukturierungselementen 60b, 61b, 62b, 63b, 64b, 65b. Die Innenraumstrukturierungselemente 60b, 61b, 62b, 63b, 64b, 65b sind als Raumteilerelemente ausgebildet. Die Innenraumstrukturierungselemente 60b, 61b, 62b, 63b, 64b, 65b sind als Stifte ausgebildet. Die Innenraumstrukturierungselemente 60b, 61b, 62b, 63b, 64b, 65b sind dazu vorgesehen, werkzeuglos montiert und gelöst zu werden. Die Innenraumstrukturierungselemente 60b, 61b, 62b, 63b, 64b, 65b sind zu einer Steckverbindung vorgesehen. Dazu weisen die Innenraumstrukturierungselemente 60b, 61b, 62b, 63b, 64b, 65b jeweils einen Rastkopf auf, der dazu vorgesehen ist, in Rastmulden 51b eines Grundkörpers 26b der Innenraumstrukturierungseinheit 12b eingesteckt zu werden. Die Rastmulden 51b sind in einem dichten Raster, ähnlich dem vorgeschlagenen Raster der Noppen 50a, im Grundkörper 26b angeordnet. Durch Umpositionierung der Innenraumstrukturierungselemente 60b, 61b, 62b, 63b, 64b, 65b auf dem Grundkörper 26b kann der Handwerkzeugkoffer 10b an unterschiedliche Größen von Handwerkzeugen und/oder Handwerkzeugakkus ermöglicht werden. Dadurch kann sichergestellt werden, dass die Handwerkzeugakkus an einer Wandung 30b des Handwerkzeugkoffers 10b anliegen, um eine effiziente induktive Ladung zu ermöglichen. An der Wandung 30b sind innenseitig Markierungen angeordnet, die dazu vorgesehen sind, eine optimale Position zu einem induktiven Ladevorgang mit einem korrespondierenden Ladegerät anzugeben.

Alternativ sind Ausgestaltungen denkbar, in denen der Grundkörper 26b von einem Polymerschaum gebildet ist und die Innenraumstrukturierungselemente 60b, 61b, 62b, 63b, 64b, 65b Steckspitzen aufweisen, wobei die Steckspitzen dazu vorgesehen sind, die Innenraumstrukturierungselemente 60b, 61b, 62b, 63b, 64b, 65b durch Einstechen in den Polymerschaum zu fixieren. Durch eine derartige Ausgestaltung kann gleichzeitig eine Polsterung erreicht werden. Weiterhin sind Ausgestaltungen denkbar, in denen die als Stifte ausgebildeten Innenraumstrukturierungselemente 60b, 61b, 62b, 63b, 64b, 65b in Löchern im Grundkörper 26b fixiert werden.

Weiterhin sind Ausgestaltungen denkbar, in denen die Innenraumstrukturierungselemente 60b, 61b, 62b, 63b, 64b, 65b als Wände oder Gitter ausgebildet sind. Weiterhin ist es denkbar, dass der Grundkörper 26b Klemmköpfe aufweist, auf die die Innenraumstrukturierungselemente 60b, 61b, 62b, 63b, 64b, 65b gesteckt werden.

Alternativ können die als Stifte ausgebildeten Innenraumstrukturierungselemente 60b, 61b, 62b, 63b, 64b, 65b dazu vorgesehen sein, in Gewindelöcher des Grundköpers eingeschraubt zu werden.

Figur 3 zeigt einen dritten Handwerkzeugkoffer 10c mit einer Innenraumstrukturierungseinheit 12c. Die Innenraumstrukturierungseinheit 12c weist einen Grundkörper 26c auf. Der Grundkörper 26c ist von zwei Raumteilerelementen 70c, 72c gebildet. Die Raumteilerelemente 70c, 72c unterteilen einen Innenraum des Handwerkzeugkoffers 10c in drei Teilbereiche. In einem ersten der Teilbereiche ist ein Innenraumstrukturierungselement 14c angeordnet. Das Innenraumstrukturierungselement 14c ist dazu vorgesehen, einen Handwerkzeugakku aufzunehmen. In einem zweiten Teilbereich ist ein Innenraumstrukturierungselement 16c angeordnet. Das Innenraumstrukturierungselement 16c ist dazu vorgesehen, ein Handwerkzeug aufzunehmen. Die Innenraumstrukturierungselemente 14c, 16c sind dazu vorgesehen, von einem Bediener bearbeitet zu werden, um es an ein einzulegendes Objekt anzupassen. Die Innenraumstrukturierungselemente 14c, 16c sind von einem Polymerschaum gebildet. Die Innenraumstrukturierungselemente 14c, 16c weisen Perforationen auf, um sie für unterschiedlich große Handwerkzeuge und/oder unterschiedlich große Handwerkzeugakkus anzupassen. Die Innenraumstrukturierungselemente 14c, 16c, sind dazu vorgesehen, in die Teilbereiche eingelegt zu werden. Die Innenraumstrukturierungselemente 14c, 16c, sind dazu vorgesehen, werkzeuglos montiert und gelöst zu werden. Diese so geformten Innenraumstrukturierungselemente 14c, 16c bilden Schalen.

Zusätzlich kann an dem Grundkörper 26c ein Verriegelungsmechanismus 74c angeordnet sein, der dazu vorgesehen ist, die Innenraumstrukturierungselemente 14c, 16c in den Teilbereichen gegen ein Herausfallen zu fixieren. Beispielsweise kann dieser Verriegelungsmechanismus 74c von einem Hebel gebildet sein, der auf einer Oberkante zumindest eines der Raumteilerelemente 70c, 72c drehbar angeordnet ist. Zu einem Öffnen wird der Hebel parallel zu dem Raumteilerelement 70c, 72c positioniert und zu einem Schließen orthogonal zu diesem. Insbesondere ist der Verriegelungsmechanismus 74c dazu vorgesehen, in Formschlusselemente der Innenraumstrukturierungselemente 14c, 16c einzugreifen und/oder sich in die Innenraumstrukturierungselemente 14c, 16c einzuschneiden.

Weiterhin sind zusätzliche Innenraumstrukturierungselemente, beispielsweise zur Aufbewahrung von Werkzeugmitteln, insbesondere Bohrern und/oder Schraubadaptern, und/oder Aufbewahrungsboxen für Werkzeugmittel oder zur Aufnahme eines weiteren Ersatzakkus denkbar, die dazu vorgesehen sind, in Zwischen- und/oder Freiräumen, beispielsweise im dritten Teilraum des Ausführungsbeispiels der Figur 3, angeordnet zu werden.

Weiterhin können die Innenraumstrukturierungselemente 14a, 16a, 60b-65b, 14c, 16c dazu vorgesehen sein, insbesondere während eines Produktionsprozesses des Handwerkzeugkoffers, dauerhaft mit dem Handwerkzeugkoffer 10a, 10b, 10c verbunden, insbesondere verklebt und/oder verschweißt, zu werden.

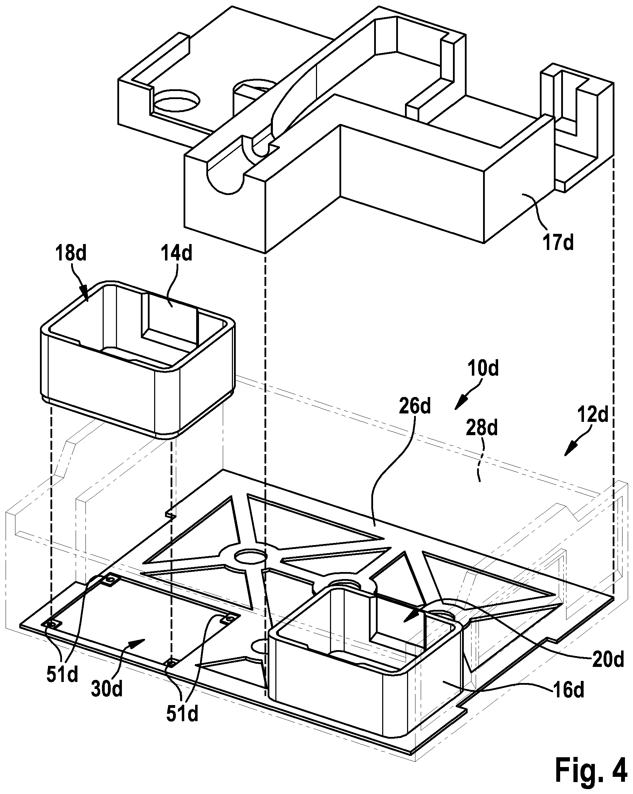

Figur 4 zeigt einen Handwerkzeugkoffer 10d mit einer Innenraumstrukturierungseinheit 12d. Die Innenraumstrukturierungseinheit 12d ist modular kombinierbar ausgebildet. Die Innenraumstrukturierungseinheit 12d weist einen Grundkörper 26d auf. Der Grundkörper 26d ist als Spritzgussteil ausgebildet. Der Grundkörper 26d ist gitterartig strukturiert. Der Grundkörper 26d weist mehrere Streben auf, die als Fixierpunkte für Innenraumstrukturierungselemente 17d dienen. Weiterhin weist der Grundkörper 26d zwei im Wesentlichen rechteckige Ausnehmungen auf, an deren Eckpunkten Rastmulden 51d vorgesehen sind. Diese bilden zwei Fixierpositionen für Innenraumstrukturierungselemente 14d, 16d. Die Innenraumstrukturierungseinheit 12d weist zwei Innenraumstrukturierungselemente 14d, 16d auf. Die Innenraumstrukturierungselemente 14d, 16d sind dazu vorgesehen, Induktivladeaufnahmebereiche 18d, 20d für jeweils einen Handwerkzeugakku zu begrenzen. In die Induktivladeaufnahmebereiche 18d, 20d eingelegte Handwerkzeugakkus sind dazu vorgesehen, durch eine als Bodenseite ausgebildete Wandung 30d eines als Schale ausgebildeten Gehäuseteils 28d des Handwerkzeugkoffers 10d induktiv geladen zu werden. Die Innenraumstrukturierungselemente 14d, 16d sind dazu vorgesehen, in die Rastmulden 51d einzurasten. Die Innenraumstrukturierungselemente 14d, 16d werden bei einer Fertigung auf den Grundkörper 26d aufgesteckt. Die Innenraumstrukturierungselemente 14d, 16d sind als nach unten geöffnete Schalten ausgebildet, so dass ein eingelegter Handwerkzeugakku an der Wandung 30d des Handwerkzeugkoffers 10d anliegt. Der Grundkörper 26d ist als flacher Körper mit einer Höhe von 0,5 cm ausgebildet. Der Grundkörper 26d bedeckt 50 % der Grundfläche des Handwerkzeugkoffers 10d bzw. des Gehäuseteils 28d. Der Grundkörper 26d ist hinsichtlich seines Umrisses bzw. seiner lateralen Ausprägung formschlüssig mit dem Gehäuseteil 28d ausgebildet. Der Grundkörper 26d ist dazu vorgesehen, sich mit dem Gehäuseteil 28d zu verklemmen. Für andere Handwerkzeugakkus sind an deren Form angepasste weitere Innenraumstrukturierungselemente vorgesehen, die mit dem gleichen Grundkörper 26d verbunden werden können. Die Rastverbindungen zwischen dem Grundkörper 26d und den Innenraumstrukturierungselementen 14d, 16d sorgen für eine exakte Positionierung über den im Wesentlichen rechteckigen Ausnehmungen des Grundkörpers 26d. Weiterhin ist ein Innenraumstrukturierungselement 17d vorgesehen, ein Handwerkzeug aufzunehmen, das dazu vorgesehen ist, mit Handwerkzeugakkus gekoppelt zu werden, die in den Induktivladeaufnahmebereichen 18d, 20d zu einer induktiven Ladung positioniert werden können. Das Innenraumstrukturierungselement 17d ist weiterhin dazu vorgesehen, ein Ladegerät aufzunehmen. Das Innenraumstrukturierungselement 17d ist in einem Tiefziehprozess gefertigt. Das Innenraumstrukturierungselement 17d ist dazu vorgesehen, in den Handwerkzeugkoffer 10d eingelegt zu werden, und durch die Innenraumstrukturierungselemente 14d, 16d und die Strukturierung des Grundkörpers 26d in Position gehalten zu werden. Für unterschiedliche Handwerkzeuge sind unterschiedliche Innenraumstrukturierungselemente vorgesehen, die mit dem Grundkörper 26d kombiniert werden können. Die Innenraumstrukturierungselemente 14d, 16d sind werkzeuglos mit dem Grundkörper 26d verbindbar. Die Innenraumstrukturierungselemente 14d, 16d sind nicht werkzeuglos von dem Grundkörper 26d lösbar. Der Grundkörper 26d ist samt den Innenraumstrukturierungselementen 14d, 16d aus dem Handwerkzeugkoffer 10d werkzeuglos lösbar. Das Innenraumstrukturierungselement 17d ist werkzeuglos in dem Handwerkzeugkoffer 10d positionierbar und werkzeuglos aus diesem entnehmbar. Das Innenraumstrukturierungselement 17d unterscheidet sich von einem Innenraumstrukturierungselement, das dazu vorgesehen ist, einen Handwerkzeugakku aufzunehmen.

In einer weiteren Ausgestaltung ist der Grundkörper 26d einstückig mit dem Gehäuseteil 28d ausgebildet, beispielsweise verschweißt oder aus einem Stück gefertigt.

## Patentansprüche

1. Handwerkzeugkoffer mit zumindest einer Innenraumstrukturierungseinheit (12a; 12b; 12c; 12d) mit zumindest einem Innenraumstrukturierungselement (14a, 16a; 60b-65b; 14c, 16c; 14d, 16d), das dazu vorgesehen ist, zumindest einen Induktivladeaufnahmebereich (18a, 20a; 18b; 20b; 18c, 20c; 18d, 20d) für zumindest einen Handwerkzeugakku zu begrenzen, **dadurch gekennzeichnet, dass** die Innenraumstrukturierungseinheit (12a; 12b; 12c; 12d) modular kombinierbar ausgebildet ist.

2. Handwerkzeugkoffer nach einem der vorhergehenden Ansprüche, **dadurch gekennzeichnet, dass** das Innenraumstrukturierungselement (14a, 16a; 60b-65b; 14c, 16c; 14d, 16d) zumindest werkzeuglos montierbar bezüglich der Innenraumstrukturierungseinheit (12a; 12b; 12c; 12d) ausgebildet ist.

3. Handwerkzeugkoffer nach Anspruch 2, **dadurch gekennzeichnet, dass** das Innenraumstrukturierungselement (14a, 16a; 60b-65b; 14c, 16c) werkzeuglos lösbar von der Innenraumstrukturierungseinheit (12a; 12b; 12c) ausgebildet ist.

4. Handwerkzeugkoffer nach einem der vorhergehenden Ansprüche, **dadurch gekennzeichnet, dass** die Innenraumstrukturierungseinheit (12a; 12b; 12c; 12d) zumindest einen Grundkörper (26a; 26b; 26c; 26d) zur Positionierung des Innenraumstrukturierungselements (14a, 16a; 60b-65b; 14c, 16c; 14d; 16d) aufweist.

5. Handwerkzeugkoffer nach Anspruch 4, **dadurch gekennzeichnet, dass** der Grundkörper (26a; 26b; 26c; 26d) zumindest zwei Fixierpositionen zu einer Fixierung des zumindest einen Innenraumstrukturierungselements (14a, 16a; 60b-65b; 14c, 16c; 14d; 16d) aufweist.

6. Handwerkzeugkoffer zumindest nach Anspruch 4, **gekennzeichnet durch** zumindest ein Gehäuseteil (28a; 28b; 28c), das einstückig mit dem Grundkörper (26a; 26b; 26c) ausgebildet ist.

7. Handwerkzeugkoffer zumindest nach Anspruch 4, **dadurch gekennzeichnet, dass** der Grundkörper (26c) von zumindest einem Raumteilerelement (70c, 72c) gebildet ist.

8. Handwerkzeugkoffer nach einem der vorhergehenden Ansprüche, **dadurch gekennzeichnet, dass** das Innenraumstrukturierungselement (14a, 16a; 60b-65b; 14d; 16d) zu einer Steckverbindung vorgesehen ist.

9. Handwerkzeugkoffer nach einem der vorhergehenden Ansprüche, **dadurch gekennzeichnet, dass** das Innenraumstrukturierungselement (60b-65b) als Raumteilerelement ausgebildet ist.

10. Handwerkzeugkoffer nach einem der vorhergehenden Ansprüche, **dadurch gekennzeichnet, dass** das Innenraumstrukturierungselement (14a, 16a; 14c, 16c) als Schale ausgebildet ist.

11. Handwerkzeugkoffer nach einem der vorhergehenden Ansprüche, **dadurch gekennzeichnet, dass** das Innenraumstrukturierungselement (14c, 16c) dazu vorgesehen ist, von einem Bediener bearbeitet zu werden, um es an ein einzulegendes Objekt anzupassen.

12. Handwerkzeugkoffer nach einem der vorhergehenden Ansprüche, **dadurch gekennzeichnet, dass** der zumindest eine Induktivladeaufnahmebereich (18a, 20a; 18b; 20b; 18c, 20c; 18d, 20d) dazu vorgesehen ist, zumindest einen Handwerkzeugakku aufzunehmen und ein induktives Laden eines in den Induktivladeaufnahmebereich (18a, 20a; 18b; 20b; 18c, 20c; 18d, 20d) eingelegten Handwerkzeugakkus zu unterstützen.

13. Handwerkzeugkoffer nach einem der vorhergehenden Ansprüche, **dadurch gekennzeichnet, dass** der zumindest eine Induktivladeaufnahmebereich (18a, 20a; 18b; 20b; 18c, 20c; 18d, 20d) dazu vorgesehen ist, zumindest einen Handwerkzeugakku aufzunehmen, der mit einem Handwerkzeug mechanisch und/oder elektrisch verbunden und/oder in ein Handwerkzeug integriert ist, und ein induktives Laden eines in den Induktivladeaufnahmebereich (18a, 20a; 18b; 20b; 18c, 20c; 18d, 20d) eingelegten Handwerkzeugakkus zu unterstützen.

14. Handwerkzeugkoffer nach einem der vorhergehenden Ansprüche, **dadurch gekennzeichnet, dass** der zumindest eine Induktivladeaufnahmebereich dazu vorgesehen ist, eine induktive Aufladung zumindest eines in dem zumindest ersten Aufnahmebereich eingelegten Handwerkzeugakku durch eine Wandung (30a; 30b; 30c; 30d) des Handwerkzeugkoffers (10a; 10b; 10c; 10d) hindurch zu bewerkstelligen.

15. Handwerkzeugkoffer nach einem der vorhergehenden Ansprüche, **dadurch gekennzeichnet, dass** die Innenraumstrukturierungseinheit (12a; 12b; 12c; 12d) zumindest zwei Innenraumstrukturierungselemente (14a, 16a; 60b-65b; 14c, 16c; 14d, 16d) aufweist, wobei die Innenraumstrukturierungselemente (14a, 16a; 14d, 16d) dazu vorgesehen sind, jeweils einen Induktivladeaufnahmebereich (18a, 20a; 18d, 20d) für jeweils einen Handwerkzeugakku zu begrenzen.

16. Handwerkzeugkoffer nach Anspruch 15, **dadurch gekennzeichnet, dass** in die Induktivladeaufnahmebereiche (18d, 20d) eingelegte Handwerkzeugakkus dazu vorgesehen sind, durch eine als Bodenseite ausgebildete Wandung (30d) eines als Schale ausgebildeten Gehäuseteils (28d) des Handwerkzeugkoffers (10d) induktiv geladen zu werden.

17. Handwerkzeugkoffer nach einem der Ansprüche 15 oder 16, **dadurch gekennzeichnet, dass** die Innenraumstrukturierungselemente (14d, 16d) als nach unten geöffnete Schalen ausgebildet sind, so dass ein eingelegter Handwerkzeugakku an der als Bodenseite ausgebildete Wandung (30d) des Handwerkzeugkoffers (10d) anliegt.

18. Handwerkzeugkoffer nach einem der vorhergehenden Ansprüche, **dadurch gekennzeichnet, dass** die Innenraumstrukturierungseinheit (12a; 12b; 12c; 12d) zumindest zwei Innenraumstrukturierungselemente (14a, 16a; 60b-65b; 14c, 16c; 14d, 16d) aufweist, wobei das eine Innenraumstrukturierungselement (14a) zu einer Lagerung eines Handwerkzeugakkus vorgesehen ist, und das andere Innenraumstrukturierungselement (16a) dazu vorgesehen ist, ein Handwerkzeug zu lagern, an das ein Handwerkzeugakku angekoppelt ist.

19. Handwerkzeugkoffer nach Anspruch 18, **dadurch gekennzeichnet, dass** eine Seite der als Schale ausgebildeten Innenraumstrukturierungselemente (14a, 16a) offen ausgebildet ist, so dass ein eingelegter Handwerkzeugakku direkt an einer Wandung (30a) des Handwerkzeugkoffers (10a) anliegt.

20. Innenraumstrukturierungselement, insbesondere eines Handwerkzeugkoffers (10a; 10b; 10c; 10d) nach einem der vorhergehenden Ansprüche, zu einer modularen Kombination mit einem Handwerkzeugkoffer (10a; 10b; 10c; 10d) nach einem der vorhergehenden Ansprüche.

21. System mit einem Handwerkzeugkoffer (10a; 10b; 10c; 10d) nach einem der Ansprüche 1 bis 19 und zumindest einem Innenraumstrukturierungselement (14a, 16a; 60b-65b; 14c, 16c; 14d, 16d) nach Anspruch 20.

22. System mit zumindest einem Handwerkzeugakku, der insbesondere dazu vorgesehen ist, induktiv geladen zu werden und/oder einem Handwerkzeug und zumindest einem Innenraumstrukturierungselement (14a, 16a; 60b-65b; 14c, 16c; 14d, 16d) nach Anspruch 20.

23. System mit zumindest einem Handwerkzeugkoffer (10a), und zumindest zwei unterschiedlichen Innenraumstrukturierungselementen (16a, 16a'), insbesondere nach Anspruch 20, wobei in Abhängigkeit von einem einzulegenden Handwerkzeug und/oder Handwerkzeugakku eines der zumindest zwei Innenraumstrukturierungselemente (16a, 16a') dazu vorgesehen ist, in den Handwerkzeugkoffer (10a) eingelegt zu werden.

## Claims

1. Portable-tool case having at least one interior-structuring unit (12a; 12b; 12c; 12d) having at least one interior-structuring element (14a, 16a; 60b-65b; 14c, 16c; 14d, 16d) that is intended to bound at least one inductive-charging receptacle region (18a, 20a; 18b; 20b; 18c, 20c; 18d, 20d) for at least one portable-tool battery, **characterized in that** the interior-structuring unit (12a; 12b; 12c; 12d) is configured to be combinable in a modular manner.

2. Portable-tool case according to one of the preceding claims, **characterized in that** the interior-structuring element (14a, 16a; 60b-65b; 14c, 16c; 14d, 16d) is configured to be mountable at least in a tool-free manner with respect to the interior-structuring unit (12a; 12b; 12c; 12d).

3. Portable-tool case according to Claim 2, **characterized in that** the interior-structuring element (14a, 16a; 60b-65b; 14c, 16c) is configured to be releasable from the interior-structuring unit (12a; 12b; 12c) in a tool-free manner.

4. Portable-tool case according to one of the preceding claims, **characterized in that** the interior-structuring unit (12a; 12b; 12c; 12d) has at least one main body (26a; 26b; 26c; 26d) for positioning the interior-structuring element (14a, 16a; 60b-65b; 14c, 16c; 14d, 16d).

5. Portable-tool case according to Claim 4, **characterized in that** the main body (26a; 26b; 26c; 26d) has at least two fixing positions for fixing the at least one interior-structuring element (14a, 16a; 60b-65b; 14c, 16c; 14d, 16d).

6. Portable-tool case at least according to Claim 4, **characterized by** at least one housing part (28a; 28b; 28c) that is formed in one piece with the main body (26a; 26b; 26c).

7. Portable-tool case at least according to Claim 4, **characterized in that** the main body (26c) is formed by at least one partition element (70c, 72c).

8. Portable-tool case according to one of the preceding claims, **characterized in that** the interior-structuring element (14a, 16a; 60b-65b; 14d, 16d) is intended for a plug connection.

9. Portable-tool case according to one of the preceding claims, **characterized in that** the interior-structuring element (60b-65b) is configured as a partition element.

10. Portable-tool case according to one of the preceding claims, **characterized in that** the interior-structuring element (14a, 16a; 14c, 16c) is in the form of a tray.

11. Portable-tool case according to one of the preceding claims, **characterized in that** the interior-structuring element (14c, 16c) is intended to be processed by an operator in order to be adapted to an object to be inserted.

12. Portable-tool case according to one of the preceding claims, **characterized in that** the at least one inductive-charging receptacle region (18a, 20a; 18b; 20b; 18c, 20c; 18d, 20d) is intended to receive at least one portable-tool battery and to support inductive charging of a portable-tool battery inserted into the inductive-charging receptacle region (18a, 20a; 18b; 20b; 18c, 20c; 18d, 20d).

13. Portable-tool case according to one of the preceding claims, **characterized in that** the at least one inductive-charging receptacle region (18a, 20a; 18b; 20b; 18c, 20c; 18d, 20d) is intended to receive at least one portable-tool battery that is mechanically and/or electrically connected to a portable tool and/or is integrated in a portable tool, and to support inductive charging of a portable-tool battery inserted into the inductive-charging receptacle region (18a, 20a; 18b; 20b; 18c, 20c; 18d, 20d).

14. Portable-tool case according to one of the preceding claims, **characterized in that** the at least one inductive-charging receptacle region is intended to effect inductive charging of at least one portable-tool battery, inserted into the at least first receiving region, through a wall (30a; 30b; 30c; 30d) of the portable-tool case (10a; 10b; 10c; 10d).

15. Portable-tool case according to one of the preceding claims, **characterized in that** the interior-structuring unit (12a; 12b; 12c; 12d) has at least two interior-structuring elements (14a, 16a; 60b-65b; 14c, 16c; 14d, 16d), wherein the interior-structuring elements (14a, 16a; 14d, 16d) are intended each to bound an inductive-charging receptacle region (18a, 20a; 18d, 20d) for in each case one portable-tool battery.

16. Portable-tool case according to Claim 15, **characterized in that** portable-tool batteries inserted into the inductive-charging receptacle regions (18d, 20d) are intended to be inductively charged through a wall (30d), configured as a bottom side, of a housing part (28d), configured as a tray, of the portable-tool case (10d).

17. Portable-tool case according to either of Claims 15 and 16, **characterized in that** the interior-structuring elements (14d, 16d) are configured as downwardly open trays, such that an inserted portable-tool battery rests against the wall (30d), configured as a bottom side, of the portable-tool case (10d).

18. Portable-tool case according to one of the preceding claims, **characterized in that** the interior-structuring unit (12a; 12b; 12c; 12d) has at least two interior-structuring elements (14a, 16a; 60b-65b; 14c, 16c; 14d, 16d), wherein one interior-structuring element (14a) is intended to mount a portable-tool battery, and the other interior-structuring element (16a) is intended to mount a portable tool to which a portable-tool battery is coupled.

19. Portable-tool case according to Claim 18, **characterized in that** one side of the interior-structuring elements (14a, 16a) configured as a tray is configured in an open manner, such that an inserted portable-tool battery rests directly against a wall (30a) of the portable-tool case (10a).

20. Interior-structuring element, in particular of a portable-tool case (10a; 10b; 10c; 10d) according to one of the preceding claims, for combining in a modular manner with a portable-tool case (10a; 10b; 10c; 10d) according to one of the preceding claims.

21. System having a portable-tool case (10a; 10b; 10c; 10d) according to one of Claims 1 to 19 and at least one interior-structuring element (14a, 16a; 60b-65b; 14c, 16c; 14d, 16d) according to Claim 20.

22. System having at least one portable-tool battery, which is intended in particular to be inductively charged, and/or a portable tool and at least one interior-structuring element (14a, 16a; 60b-65b; 14c, 16c; 14d, 16d) according to Claim 20.

23. System having at least one portable-tool case (10a) and at least two different interior-structuring elements (16a, 16a'), in particular according to Claim 20, wherein, depending on a portable tool and/or portable-tool battery to be inserted, one of the at least two interior-structuring elements (16a, 16a') is intended to be inserted into the portable-tool case (10a).

## Revendications

1. Boîte à outils à main comportant au moins une unité de structuration d'espace intérieur (12a ; 12b ; 12c ; 12d) comportant au moins un élément de structuration d'espace intérieur (14a, 16a ; 60b-65b ; 14c, 16c ; 14d, 16d) qui est prévu pour limiter au moins une zone de réception de charge inductive (18a, 20a ; 18b, 20b ; 18c, 20c ; 18d, 20d) destinée à au moins une batterie d'outils à main, **caractérisée en ce que** l'unité de structuration d'espace intérieur (12a ; 12b ; 12c ; 12d) peut être conçue de manière à pouvoir être combinée de façon modulaire.

2. Boîte à outils à main selon l'une des revendications précédentes, **caractérisée en ce que** l'élément de structuration d'espace intérieur (14a, 16a ; 60b-65b ; 14c, 16c ; 14d, 16d) est conçu pour être monté au moins sans outils par rapport à l'unité de structuration d'espace intérieur (12a ; 12b ; 12c ; 12d) .

3. Boîte à outils à main selon la revendication 2, **caractérisée en ce que** l'élément de structuration d'espace intérieur (14a, 16a ; 60b-65b ; 14c, 16c) est conçu pour pouvoir être détaché sans outils de l'unité de structuration d'espace intérieur (12a ; 12b ; 12c).

4. Boîte à outils à main selon l'une des revendications précédentes, **caractérisée en ce que** l'unité de structuration d'espace intérieur (12a ; 12b ; 12c ; 12d) comprend au moins un corps de base (26a ; 26b ; 26c ; 26d) destiné à positionner l'élément de structuration d'espace intérieur (14a, 16a ; 60b-65b ; 14c, 16c ; 14d, 16d) .

5. Boîte à outils à main selon la revendication 4, **caractérisée en ce que** le corps de base (26a ; 26b ; 26c ; 26d) présente au moins deux positions de fixation de l'au moins un élément de structuration de l'espace intérieur (14a, 16a ; 60b-65b ; 14c, 16c ; 14d, 16d).

6. Boîte à outils à main au moins selon la revendication 4, **caractérisée par** au moins une partie de boîtier (28a ; 28b ; 28c) qui est conçue d'une seule pièce avec le corps de base (26a ; 26b ; 26c).

7. Boîte à outils à main selon au moins la revendication 4, **caractérisée en ce que** le corps de base (26c) est formé d'au moins un élément séparateur d'espace (70c, 72c).

8. Boîte à outils à main selon l'une des revendications précédentes, **caractérisée en ce que** l'élément de structuration d'espace intérieur (14a, 16a ; 60b-65b ; 14d ; 16d) est muni d'une liaison par enfichage.

9. Boîte à outils à main selon l'une des revendications précédentes, **caractérisée en ce que** l'élément de structuration d'espace intérieur (60b-65b) est conçu comme un élément séparateur d'espace.

10. Boîte à outils à main selon l'une des revendications précédentes, **caractérisée en ce que** l'élément de structuration d'espace intérieur (14a, 16a ; 14c, 16c) est réalisé sous la forme d'une coque.

11. Boîte à outils à main selon l'une des revendications précédentes, **caractérisée en ce que** l'élément de structuration d'espace intérieur (14c, 16c) est prévu pour être façonné par un opérateur afin de l'adapter à un objet à insérer.

12. Boîte à outils à main selon l'une des revendications précédentes, **caractérisée en ce que** l'au moins une région de réception de charge inductive (18a, 20a ; 18b ; 20b ; 18c, 20c ; 18d, 20d) est prévue pour recevoir au moins une batterie d'outils à main et pour supporter une charge inductive d'une batterie d'outil à main insérée dans la région de réception de charge inductive (18a, 20a ; 18b ; 20b ; 18c, 20c ; 18d, 20d).

13. Boîte à outils à main selon l'une des revendications précédentes, **caractérisée en ce que** l'au moins une région de réception de charge inductive (18a, 20a ; 18b ; 20b ; 18c, 20c ; 18d, 20d) est prévue pour recevoir au moins une batterie d'outil à main qui est reliée mécaniquement et/ou électriquement à un outil à main et/ou qui est intégrée à un outil à main et pour supporter une charge inductive d'une batterie d'outil à main insérée dans la région de réception de charge inductive (18a, 20a ; 18b ; 20b ; 18c, 20c ; 18d, 20d).

14. Boîte à outils à main selon l'une des revendications précédentes, **caractérisée en ce que** l'au moins une région de réception de charge inductive est prévue pour effectuer une charge inductive d'au moins une batterie d'outil à main insérée dans l'au moins une première région de réception à travers une paroi (30a ; 30b ; 30c ; 30d) de la boîte à outils à main (10a ; 10b ; 10c ; 10d).

15. Boîte à outils à main selon l'une des revendications précédentes, **caractérisée en ce que** l'unité de structuration d'espace intérieur (12a ; 12b ; 12c ; 12d) comprend au moins deux éléments de structuration d'espace intérieur (14a, 16a ; 60b-65b ; 14c, 16c ; 14d, 16d), les éléments de structuration d'espace intérieur (14a, 16a ; 14d, 16d) étant prévus pour délimiter respectivement une région de réception de charge inductive (18a, 20a ; 18d, 20d) pour chaque batterie d'outils à main.

16. Boîte à outils à main selon la revendication 15, **caractérisée en ce que** des batteries d'outils à main insérées dans les régions de réception de charge inductive (18d, 20d) sont prévues pour être chargées par induction à travers une paroi (30d), conçue comme un côté fond, d'une partie de boîtier (28d), conçue comme une coque, de la boîte à outils à main (10d).

17. Boîte à outils à main selon l'une des revendications 15 ou 16, **caractérisée en ce que** les éléments de structuration d'espace intérieur (14d, 16d) sont conçus sous la forme de coques ouvertes vers le bas de sorte qu'une batterie d'outil à main insérée vient en appui sur la paroi (30d), conçue comme un côté fond, de la boîte à outils à main (10d).

18. Boîte à outils à main selon l'une des revendications précédentes, **caractérisée en ce que** l'unité de structuration d'espace intérieur (12a ; 12b ; 12c ; 12d) comporte au moins deux éléments de structuration d'espace intérieur (14a, 16a ; 60b-65b ; 14c, 16c ; 14d, 16d), un premier élément de structuration d'espace intérieur (14a) étant prévu pour supporter une batterie d'outil à main, et l'autre élément de structuration d'espace intérieur (16a) étant prévu pour supporter un outil à main auquel une batterie d'outil à main est couplée.

19. Boîte à outils à main selon la revendication 18, **caractérisée en ce qu'**un côté des éléments de structuration d'espace intérieur (14a, 16a) conçu comme une coque est conçu pour être ouvert de sorte qu'une batterie d'outil à main insérée vienne en appui directement sur une paroi (30a) de la boîte à outils à main (10a).

20. Elément de structuration d'espace intérieur, notamment d'une boîte à outils à main (10a ; 10b ; 10c ; 10d) selon l'une des revendications précédentes, destiné à être combiné de manière modulaire avec une boîte à outils à main (10a ; 10b ; 10c ; 10d) selon l'une des revendications précédentes.

21. Système comprenant une boîte à outils à main (10a ; 10b ; 10c ; 10d) selon l'une quelconque des revendications 1 à 19 et au moins un élément de structuration d'espace intérieur (14a, 16a ; 60b-65b ; 14c, 16c ; 14d, 16d) selon la revendication 20.

22. Système comprenant au moins une batterie d'outil à main, qui est notamment prévue pour être chargée par induction et/ou un outil à main et au moins un élément de structuration d'espace intérieur (14a, 16a ; 60b-65b ; 14c, 16c ; 14d, 16d) selon la revendication 20.

23. Système comprenant au moins une boîte à outils à main (10a) et au moins deux éléments de structuration d'espace intérieur différents (16a, 16a'), en particulier selon la revendication 20, l'un au moins des deux éléments de structuration d'espace intérieur (16a, 16a') étant prévu pour être inséré dans la boîte d'outils à main (10a) en fonction d'un outil à main et/ou d'une batterie d'outil à main à insérer.
